# EUROPÄISCHE PATENTSCHRIFT

(11) **EP 2 464 550 B1**
(45) Veröffentlichungstag und Bekanntmachung des Hinweises auf die Patenterteilung: **27.01.2016**
(21) Anmeldenummer: 10739565.9
(22) Anmeldetag: 27.07.2010
(51) Int. Cl.: B60T 13/72, B60T 7/04, B60T 8/40

(54) **BREMSBETÄTIGUNGSEINHEIT ZUR BETÄTIGUNG EINER KRAFTFAHRZEUGBREMSANLAGE VOM TYP "BRAKE-BY-WIRE" SOWIE VERFAHREN ZUM BETREIBEN EINER KRAFTFAHRZEUGBREMSANLAGE MIT EINER DERARTIGEN BREMSBETÄTIGUNGSEINHEIT**
BRAKE ACTUATING UNIT FOR ACTUATING A MOTOR VEHICLE BRAKING SYSTEM OF THE "BRAKE-BY-WIRE" TYPE, AND METHOD FOR OPERATING A MOTOR VEHICLE BRAKING SYSTEM BY MEANS OF SUCH A BRAKE ACTUATING UNIT
UNITÉ D'ACTIONNEMENT DE FREIN DESTINÉE À ACTIONNER UN SYSTÈME DE FREINAGE DE VÉHICULE AUTOMOBILE DU TYPE « BRAKE-BY-WIRE » (À COMMANDE ÉLECTRONIQUE), AINSI QUE PROCÉDÉ PERMETTANT DE FAIRE FONCTIONNER UN SYSTÈME DE FREINAGE DE VÉHICULE AUTOMOBILE AU MOYEN D'UNE TELLE UNITÉ D'ACTIONNEMENT DE FREIN

(30) Priorität: 11.08.2009 DE 102009037098
(43) Veröffentlichungstag der Anmeldung: 20.06.2012
(73) Patentinhaber: Continental Teves AG & Co. oHG, 60488 Frankfurt (DE)
(72) Erfinder: VOGT, Michael, 55469 Simmern (DE); BUCHHOLZ, Ingolf, 35510 Butzbach (DE); SCHUBERT, Alexander, 61476 Kronberg (DE); NEU, Thorsten, 65594 Runkel (DE); RÖSSLER, Thomas, 35287 Amöneburg (DE)
(86) Internationale Anmeldenummer: PCT/EP2010/060871
(87) Internationale Veröffentlichungsnummer: WO 2011/018329

(56) Entgegenhaltungen:
- EP-A2- 1 738 983
- DE-A1-102005 049 199
- DE-A1-102007 016 754

## Beschreibung

Die Erfindung betrifft eine Bremsbetätigungseinheit zur Betätigung einer Kraftfahrzeugbremsanlage vom Typ "Brake-by-wire" , wobei die Bremsbetätigungseinheit aufweist: einen Bremskraftverstärker mit einem Verstärkergehäuse, dessen Innraum durch wenigstens eine bewegliche Wand in eine Unterdruckkammer und eine Arbeitskammer unterteilt ist, sowie mit einem die bewegliche Wand tragenden Steuergehäuse, in dem ein Steuerventil angeordnet ist, das eine auf die bewegliche Wand einwirkende pneumatische Druckdifferenz steuert, wobei das Steuerventil sowohl mittels eines mit einem Bremspedal in eine kraftübertragende Verbindung bringbaren, mit einer Eingangskraft beaufschlagbaren Eingangsglieds als auch mittels einer elektronischen Steuereinheit durch einen Elektromagneten betätigbar ist, wobei zwischen dem Bremspedal und dem Bremskraftverstärker ein Abstand vorgesehen ist, der in der Betriebsart "Brake-by-wire" eine Entkopplung einer kraftübertragenden Verbindung zwischen Bremspedal und Bremskraftverstärker ermöglicht, einen dem Bremskraftverstärker nachgeschalteten Hauptbremszylinder, auf dessen Kolben eine Ausgangskraft des Bremskraftverstärkers übertragen wird, Mittel zum Erfassen des Betätigungsweges des Bremspedals, einen mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist, sowie ein Verfahren zum Betreiben einer Kraftfahrzeugbremsanlage vom Typ "Brake-by-wire" mit einer derartigen Bremsbetätigungseinheit.

Eine derartige Bremsbetätigungseinheit sowie ein Verfahren zur Überwachung der Funktionsfähigkeit der Bremsbetätigungseinheit sind z. B. aus der deutschen Patentanmeldung DE 10 2007 016 754 A1 bekannt und finden beispielsweise bei Hybridfahrzeugen Verwendung. Die bekannte Bremsbetätigungseinheit weist eine Zu- bzw. Abschalteinrichtung auf, die den Pedalwegsimulator in der Betriebsart "Brake-by-wire" bei der Entkopplung der kraftübertragenden Verbindung zwischen dem Bremspedal und dem Bremskraftverstärker zu- und außerhalb der Betriebsart "Brake-by-wire" abschaltet. Die Abschaltung ist bei der bekannten Bremsbetätigungseinheit notwendig, um die gesetzliche Mindestverzögerung in einem Fehlerfall, d.h. in der Rückfallebene zu gewährleisten. Der Pedalwegsimulator wird in diesem Fall kraftfrei geschaltet und der Fahrer des Kraftfahrzeuges kann die Bremswirkung durch die Kopplung der kraftübertragenden Verbindung zwischen Bremspedal und Bremskraftverstärker mit gewohntem Pedalgefühl erzielen. Da die Zu- und Abschalteinrichtung Teile aufweist, die im By-wire-Modus nicht bewegt werden, ist eine gesonderte Überprüfung notwendig. Die Bereitstellung der Zu- bzw. Abschalteinrichtung sowie das benötigte Verfahren zur Überwachung werden generell als aufwendig angesehen.

Daher ist es Aufgabe der Erfindung, eine Bremsbetätigungseinheit zur Betätigung einer Kraftfahrzeugbremsanlage vom Typ "Brake-by-wire" bereitzustellen, welche einerseits die gesetzlichen Anforderungen erfüllt und andererseits kostengünstig herstellbar ist.

Diese Aufgabe wird erfindungsgemäß dadurch gelöst, dass der Bremskraftverstärker als weggesteuerter Bremskraftverstärker vorgesehen ist, so dass das Bremspedal außerhalb der Betriebsart "Brake-by-wire" von Rückwirkungskräften der Bremsbetätigungseinheit entkoppelt ist, und die Rückstellkraft auch außerhalb der Betriebsart "Brake-by-wire" durch den Pedalwegsimulator simuliert wird. Es entfällt also die Gegenkraft, die der Fahrer in der Rückfallebene aufbringen muss, um das Fahrzeug zum Stillstand zu bringen. Hierdurch ist es möglich, die Zu- und Abschalteinrichtung der bekannten Bremsbetätigungseinheit entfallen zu lassen und dennoch die gesetzlichen Anforderungen einzuhalten.

Vorzugsweise ist die Eingangskraft des Bremskraftverstärkers nur indirekt auf den Kolben des Hauptbremszylinders übertragbar und die Ausgangskraft des Bremskraftverstärkers wird über eine starre, kraftübertragende Verbindung auf den Hauptbremszylinder übertragen. Hiermit kann sichergestellt werden, dass der Fahrer frei von Rückwirkungen des dem Bremskraftverstärker nachgeschalteten Hauptbremszylinders ist.

Gemäß einer vorteilhaften Ausführungsform der Erfindung wird die Ausgangskraft von dem Steuergehäuse über eine starre Scheibe auf den Hauptbremszylinder übertragen, wobei die Scheibe dichtend in einer Ausnehmung des Steuergehäuses angeordnet ist. Die starre Scheibe kann das elastische Reaktionselement des Bremskraftverstärkers der bekannten Bremsbetätigungseinheit ohne weitere Änderungen der Bauteile, insbesondere des Steuergehäuses bzw. eines Steuergehäusevorderteiles ersetzen.

Um die Änderung der bekannten Bauteile so gering wie möglich zu halten, ist vorzugsweise vorgesehen, dass die Ausgangskraft von dem Steuergehäuse über die starre Scheibe unter Zwischenschaltung eines Ausgangsgliedes auf den Kolben des Hauptbremszylinders übertragen wird.

Das Ausgangsglied kann als Bauteil eingespart werden, indem gemäß einer vorteilhaften Weiterbildung der Erfindung die Ausgangskraft von dem Steuergehäuse über die starre Scheibe direkt auf den Kolben des Hauptbremszylinders übertragen wird.

Eine einfache Abdichtung des Steuergehäuses kann dadurch erzielt werden, dass zur Abdichtung am Umfang der Scheibe ein ringförmiges Dichtelement vorgesehen ist.

Eine weitere vorteilhafte Ausführungsform der Erfindung sieht vor, dass die Ausgangskraft von dem Steuergehäuse unter Zwischenschaltung eines elastischen, scheibenförmigen Dichtelements auf ein Ausgangsglied oder direkt auf den Kolben des Hauptbremszylinders übertragen wird, wobei eine Öffnung des Steuergehäuses mittels eines Hülsenelementes verschlossen ist und die Öffnung mittels des elastischen, scheibenförmigen Dichtelementes abgedichtet vorgesehen ist. Als elastisches, scheibenförmiges Dichtelement kann das bekannte Reaktionselement Verwendung finden.

Die vorstehend genannte Aufgabe wird weiter durch ein Verfahren zum Betreiben einer Kraftfahrzeugbremsanlage vom Typ "Brake-by-wire" mit einer erfindungsgemäßen Bremsbetätigungseinheit gelöst, welches dadurch gekennzeichnet ist, dass die Ansteuerung des Bremskraftverstärkers rein wegabhängig erfolgt, so dass das Bremspedal außerhalb der Betriebsart "Brake-by-wire" von Rückwirkungskräften der Bremsbetätigungseinheit entkoppelt ist, und die Rückstellkraft auch außerhalb der Betriebsart "Brake-by-wire" durch den Pedalwegsimulator simuliert wird.

Weitere Merkmale, Vorteile und Anwendungsmöglichkeiten der Erfindung gehen aus den Unteransprüchen und der nachfolgenden Beschreibung eines Ausführungsbeispiels sowie anhand der Zeichnung hervor.

Es zeigt jeweils stark schematisiert:
- Figur 1: eine bekannte Bremsbetätigungseinheit im Teilschnitt;
- Figur 2: einen Ausschnitt eines Bremskraftverstärkers einer ersten Ausführungsform einer erfindungsgemäßen Bremsbetätigungseinheit;
- Figur 3: einen Ausschnitt eines Bremskraftverstärkers einer zweiten Ausführungsform einer erfindungsgemäßen Bremsbetätigungseinheit und
- Figur 4: ein Weg-Druck-Diagramm einer erfindungsgemäßen Bremsbetätigungseinheit.

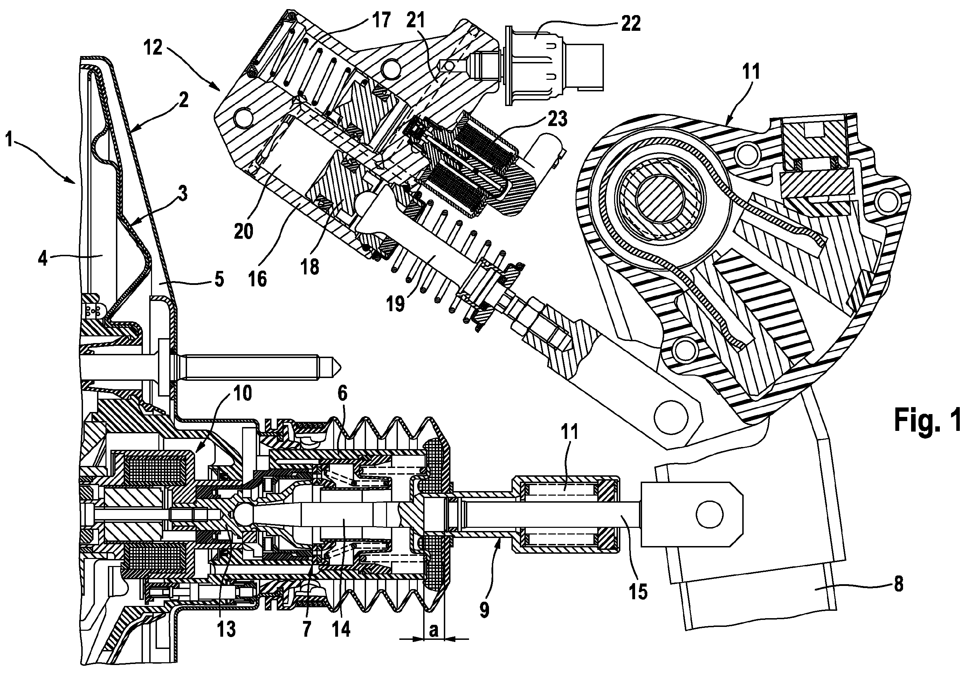

Fig. 1 zeigt einen Ausschnitt einer bekannten Bremsbetätigungseinheit zur Betätigung einer Kraftfahrzeugbremsanlage vom Typ "Brake-by-wire". Deshalb ist in Fig. 1 in einer Teilschnittdarstellung lediglich ein Bremskraftverstärker 1, vorzugsweise ein Unterdruckbremskraftverstärker angedeutet. Dieser weist ein Verstärkergehäuse 2, dessen Innraum durch wenigstens eine bewegliche Wand 3 in eine Unterdruckkammer 4 und eine Arbeitskammer 5 unterteilt ist, sowie ein die bewegliche Wand 3 tragendes Steuergehäuse 6 auf, in dem ein Steuerventil 7 angeordnet ist, das eine auf die bewegliche Wand 3 einwirkende pneumatische Druckdifferenz steuert. Das Steuerventil 7 ist sowohl mittels eines mit einem Bremspedal 8 in eine kraftübertragende Verbindung bringbaren Eingangsglieds 9 als auch mittels einer elektronischen Steuereinheit durch einen Elektromagneten 10 betätigbar.

Dem Bremskraftverstärker 1 ist ein nicht dargestellter Hauptbremszylinder nachgeschaltet, auf dessen Kolben eine Ausgangskraft des Bremskraftverstärkers 1 übertragen wird. Der Hauptbremszylinder ist vorzugsweise als Tandem-Hauptbremszylinder vorgesehen, an dessen Druckräume unter Zwischenschaltung einer hydraulischen Steuer- und Regeleinheit nicht gezeigte Radbremsen angeschlossen sind.

Ein mit dem Bremspedal 8 insbesondere in der Betriebsart "Brake-by-wire" zusammenwirkender Pedalwegsimulator 11, der dem Fahrer das gewöhnliche Bremspedalgefühl vermittelt, wirkt mit einer elektrohydraulischen Zu- und Abschaltvorrichtung 12 zusammen, die den Pedalwegsimulator 11 außerhalb der Betriebsart "Brake-by-wire" abschaltet.

Ein Fahrerverzögerungswunsch bzw. der Betätigungsweg des Bremspedals 8 wird mittels mindestens einer Sensoreinrichtung erfasst, deren Signale einer elektronischen Steuereinheit zugeführt werden. Durch die Ausgangssignale der elektronischen Steuereinheit ist u. a. der Elektromagnet 10 ansteuerbar, der eine vom Fahrerwillen unabhängige Betätigung des pneumatischen Steuerventils 7 ermöglicht.

Der Übertragung der am Bremspedal 8 eingeleiteten Betätigungskraft auf einen Ventilkolben 13 des Steuerventils 7 dient das mit dem Bremspedal 8 gekoppelte Eingangsglied 9, das zweiteilig ausgebildet ist und aus einem mit dem Ventilkolben 6 verbundenen ersten Teil 14 sowie einem mit dem Bremspedal 8 verbundenen zweiten Teil 15 besteht. Zwischen den beiden Teilen 14,15 ist ein axialer Abstand "a" vorgesehen, der in der Betriebsart "Brake-by-wire" eine Entkopplung der kraftübertragenden Verbindung zwischen dem Bremspedal 8 und dem Bremskraftverstärker 1 gewährleistet. Andere Ausführungsformen bekannter Bremsbetätigungseinheiten sehen den Abstand "a" beispielsweise zwischen dem Eingangsglied 9 und dem Bremspedal 3 vor.

Die vorhin erwähnte Zu- und Abschaltvorrichtung 12 weist im Wesentlichen eine Kolben-Zylinder-Anordnung 16 sowie einen hydraulischen Druckmittelaufnahmeraum 17 auf. Ein Kolben 18 der Kolben-Zylinder-Anordnung 16 steht mittels einer Betätigungsstange 19 mit dem Pedalwegsimulator 11 in kraftübertragender Verbindung und begrenzt einen Druckraum 20, der mittels einer mit gestrichelten Linien dargestellten gezeigten hydraulischen Verbindung 21 an den Druckmittelaufnahmeraum 17 angeschlossen ist, der im gezeigten Beispiel als ein Niederdruckspeicher ausgebildet ist. An die hydraulische Verbindung 21 ist ein Drucksensor 22 angeschlossen, der dem Erfassen des im Druckraum 17 herrschenden Druckes dient. Die Verbindung 21 ist mittels eines Absperrventils 23 absperrbar bzw. freigebbar.

Die Abschaltung des Pedalwegsimulators 11 bei der bekannten Bremsbetätigungseinheit ist notwendig, um die gesetzliche Mindestverzögerung des Fahrzeuges in einem Fehlerfall, d.h. in der Rückfallebene zu gewährleisten. Der Pedalwegsimulator 11 wird in diesem Fall kraftfrei geschaltet und der Fahrer des Kraftfahrzeugs kann die Bremswirkung durch die Kopplung der kraftübertragenden Verbindung zwischen Bremspedal 8 und Bremskraftverstärker 1 durch Überwindung des Abstandes a zwischen den beiden Teilen 14 und 15 mit gewohntem Pedalgefühl erzielen. Das heißt, dass der Fahrer den Bremskraftverstärker 1 wie gewohnt kraft-weg-gesteuert betätigt, da er die Rückwirkungskräfte des aufgebauten Druckes im Hydraulik-Kreis als Ansprechkraft spürt.

Die Bremskraft wird bekanntermaßen über ein in dem Steuergehäuse 6 bzw. in dessen Steuergehäusevorderteil angeordnetes gummi-elastisches Reaktionselement sowie ein Ausgangsglied auf einen Kolben des Hauptbremszylinders der Kraftfahrzeugbremsanlage übertragen, der am unterdruckseitigen Ende des Bremskraftverstärkers 1 angebracht ist. Die an dem Eingangsglied 9 eingeleitete Eingangskraft wird auf das Reaktionsglied mittels des Ventilkolbens 13 übertragen.
Das Reaktionselement ist scheibenförmig aus Kunststoff- oder Gummiwerkstoff ausgebildet und verhält sich unter Druckbeanspruchung nach den Gesetzen der Hydrostatik wie ein inkompressibles Fluid. Das heißt es fungiert gewissermaßen als Summierer zwischen den, vom Eingangsglied 9 und Ventilkolben 13 eingeleitete Eingangskraft, den über das Steuergehäuse 6 eingebrachten Verstärkungskräften sowie den Bremsreaktionskräften. Diese Bremsreaktionskräfte bzw. Rückwirkungskräfte werden auf den Fahrer rückübertragen, indem eine Kraftübertragung von dem Reaktionselement über den Elektromagneten 10, den Ventilkolben 13 und das Eingangsglied 9 erfolgt.

Da die Zu- und Abschalteinrichtung 12 Teile aufweist, die in der Betriebsart "Brake-by-wire" nicht bewegt werden, ist eine gesonderte Überprüfung notwendig. Die Bereitstellung der Zu- bzw. Abschalteinrichtung 12 sowie das benötigte Verfahren zur Überwachung werden generell als aufwendig angesehen.

Die nachfolgend beschriebenen Ausführungsbeispiele einer erfindungsgemäßen Bremsbetätigungseinheit lösen daher die Aufgabe, eine Bremsbetätigungseinheit zur Betätigung einer Kraftfahrzeugbremsanlage vom Typ "Brake-by-wire" bereitzustellen, welche einerseits die gesetzlichen Anforderungen erfüllt und andererseits kostengünstig herstellbar ist.

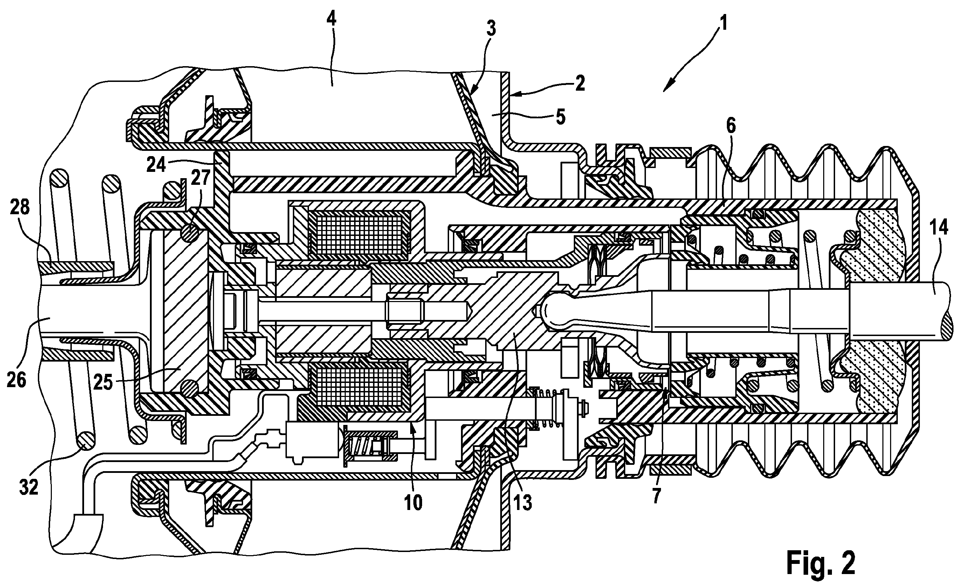

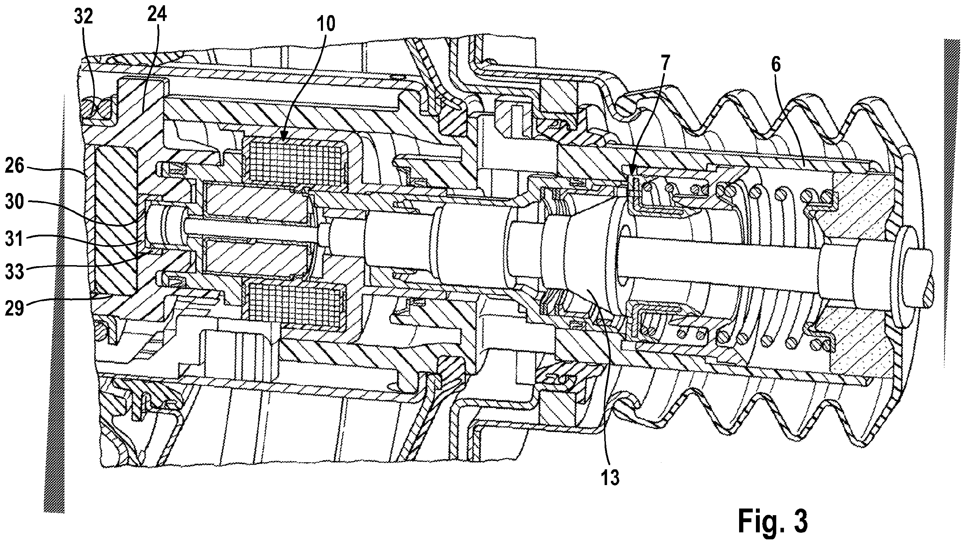

Den Fig. 2 und 3 ist jeweils ein Ausschnitt eines Bremskraftverstärkers 1 einer erfindungsgemäßen Bremsbetätigungseinheit zu entnehmen. Die beiden Ausführungsbeispiele unterscheiden sich zur beschriebenen bekannten Bremsbetätigungseinheit gemäß Fig. 1 im Wesentlichen durch die Verwendung eines weggesteuerten Bremskraftverstärkers 1, so dass nur die erfindungswesentlichen Merkmale im Nachfolgenden beschrieben werden. Gleiche Bauteile sind mit gleichen Bezugszeichen versehen.

Die Verwendung eines rein weggesteuerten Bremskraftverstärkers im Gegensatz zu dem bekannten kraft-weg-gesteuerten Bremskraftverstärkers gemäß Fig. 1 hat den Effekt, dass das Bremspedal 8 außerhalb der Betriebsart "Brake-by-wire" von Rückwirkungskräften der Bremsbetätigungseinheit entkoppelt ist, und die Rückstellkraft auch außerhalb der Betriebsart "Brake-by-wire" durch den Pedalwegsimulator 11 simuliert wird. Es entfällt also die Gegenkraft, die der Fahrer in der Rückfallebene aufbringen muss, um das Fahrzeug zum Stillstand zu bringen. Hierdurch ist es möglich, die zuvor beschriebene Zu- und Abschalteinrichtung 12 der bekannten Bremsbetätigungseinheit komplett entfallen zu lassen und dennoch die gesetzlichen Anforderungen bezüglich Fahrerfußkraft im Verhältnis zur Fahrzeugverzögerung im Fehlerfall einzuhalten.

Wie Fig. 2 zu entnehmen ist, ist anstelle des bekannten Reaktionselementes im Steuergehäuse 6 bzw. in einem Steuergehäusevorderteil 24 eine starre Scheibe 25, vorzugsweise aus Stahl, eingelegt, an welcher ein Ausgangsglied 26 anliegt. Hierdurch kann in der Rückfallebene die am Bremspedal 8 eingeleitete Eingangskraft nicht über den Ventilkolben 13 auf das Ausgangsglied 26 übertragen werden. Die Beaufschlagung des Ausgangsliedes 26 mit der Ausgangskraft erfolgt durch die bekannte Funktion des Steuerventils 7, welches eine Druckdifferenz zwischen der Arbeits- und der Unterdruckkammer 5,4 steuert. Es ist anzumerken, dass der Bremskraftverstärker 1, wie in Fig. 2 gezeigt ist, auch als Tandem-Bremskraftverstärker ausgebildet sein kann. Eine Rückwirkung des aufgebauten Druckes im Hydraulik-Kreis auf den Fahrer ist ausgeschlossen, da die starre Scheibe 25 keine Kräfte auf den Elektromagneten 10 und Ventilkolben 13 rückübertragen kann.

Zur Abdichtung des Steuergehäusevorderteils 24 ist am Umfang der Scheibe 25 ein ringförmiges Dichtelement 27 in Form eines O-Ringes vorgesehen.

Die starre Scheibe 25 kann das elastische Reaktionselement des Bremskraftverstärkers der bekannten Bremsbetätigungseinheit ohne weitere Änderungen der Bauteile, insbesondere des Steuergehäusevorderteiles 24, ersetzen.

Die Ausgangskraft des Bremskraftverstärkers 1 wird somit über eine starre, kraftübertragende Verbindung auf den Hauptbremszylinder übertragen. Dabei wird die Ausgangskraft von dem Steuergehäusevorderteil 24 über die starre Scheibe 25 unter Zwischenschaltung des Ausgangsgliedes 26 auf einen angedeuteten Kolben 28 des Hauptbremszylinders übertragen, um die Änderung der bekannten Bauteile so gering wie möglich zu halten.

Gemäß einer anderen vorteilhaften, nicht dargestellten Ausführungsform ist es denkbar, die Ausgangskraft von dem Steuergehäusevorderteil 24 über die starre Scheibe 25 direkt auf den Kolben 28 des Hauptbremszylinders zu übertragen, so dass das Ausgangsglied 26 als Bauteil eingespart werden kann.

Ein zweites Ausführungsbeispiel der Erfindung gemäß Fig. 3 sieht vor, die Ausgangskraft von dem Steuergehäuse 6 bzw. dessen Steuergehäusevorderteil 24 unter Zwischenschaltung eines elastischen, scheibenförmigen Dichtelements 29 auf das Ausgangsglied 26 oder auch direkt auf den Kolben 28 des Hauptbremszylinders zu übertragen. Eine in dem Steuergehäusevorderteil 24 vorgesehene Öffnung 30 kann dabei mittels eines Hülsenelementes 31 verschlossen werden, wobei die Öffnung 30 mittels des elastischen, scheibenförmigen Dichtelementes 29 abgedichtet wird. Als elastisches, ringförmiges Dichtelement 29 kann das bekannte Reaktionselement Verwendung finden.

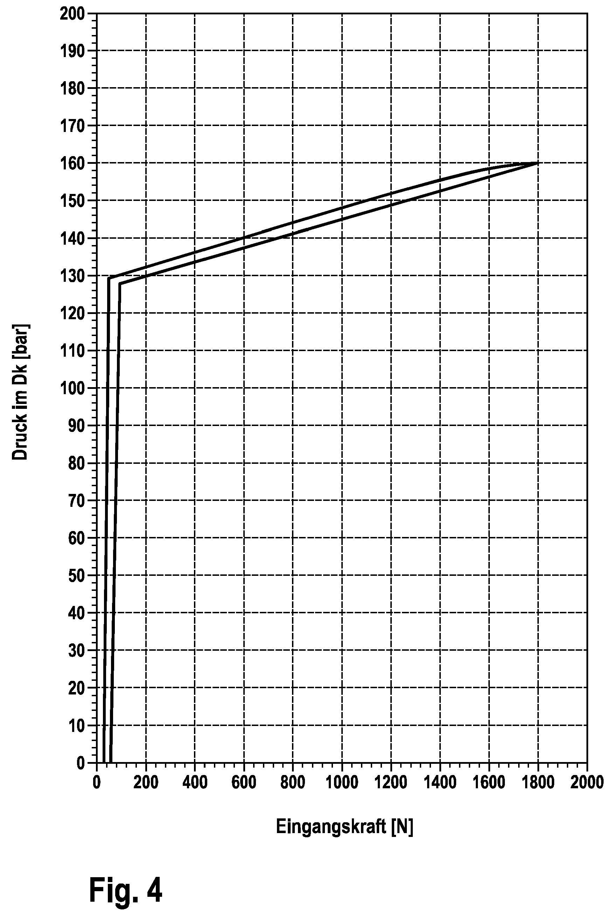

Fig. 4 zeigt ein typisches Weg-Druck-Diagramm einer erfindungsgemäßen Bremsbetätigungseinheit.

Ein weiteres, nicht gezeigtes Ausführungsbeispiel sieht vor, dass Steuergehäusevorderteil 24 derart auszugestalten, dass es keine Öffnung 30 aufweist. Hierdurch kann die Scheibe 25 sowie die Abdichtung mittels des Dichtelementes 27 bzw. des scheibenförmigen Dichtelementes 29 komplett entfallen. Auch ein in Fig. 3 dargestelltes Druckstück 33 kann entfallen, da wie beschrieben, die Eingangskraft nur indirekt übertragen wird. Das Steuergehäusevorderteil 24 kann dadurch wesentlich vereinfacht werden.

Den Ausführungsbeispielen sind die folgend aufgeführten Vorteile gemein:
- Die Zu- und Abschaltvorrichtung 12 der bekannten Bremsbetätigungseinheit entfällt ersatzlos, wodurch eine Kostenersparnis erzielt wird.
- Durch den Wegfall der Zu- und Abschaltvorrichtung 12 entfällt auch eine komplizierte Überwachung, wodurch auch Fehlerquellen vermieden werden können, so dass das Bremssystem insgesamt robuster wird.
- Die Bremsbetätigungseinheit kann robuster ausgeführt werden. Hieraus ergibt sich ein geringeres Bremspedalspiel.
- Im Fehlerfall geschieht die Rückstellung des Bremspedals 8 durch den Pedalwegsimulator 11 insbesondere in Kälte sicherer und schneller.
- Da der Bremskraftverstärker 1 weggesteuert ausgebildet ist, kann dessen Ansprechkraft reduziert werden.
- Durch Platzgewinn im Bremskraftverstärker 1 kann der Elektromagnet 10 vergrößert, so dass mehr Kraft zum Öffnen des Steuerventils 7 insbesondere bei Kälte zur Verfügung steht. Es entsteht somit ein erweiterter Arbeits-Temperaturbereich und die Kennlinie des Bremskraftverstärkers 1 kann optimiert werden, wodurch der Komfort beim Druckregeln erhöht werden kann.
- Das Steuergehäusevorderteil 24 kann gemäß einem nicht gezeigten Ausführungsbeispiel wesentlich vereinfacht werden, so dass die starre Scheibe 25 komplett entfallen kann. Wird zusätzlich die Öffnung 30 schon bei der Herstellung des Steuergehäusevorderteils 24 weggelassen, entfällt auch die Abdichtung dieser Stelle. Das Steuergehäusevorderteil 24 dient dann nur noch der Abstützung einer Gerätefeder 32 und des Ausgangsgliedes 26. Somit können eine Kostenersparnis sowie weitere Robustheit erzielt werden.
- Durch den Wegfall des Reaktionselementes wird der Verlustweg durch Längenzunahme infolge von Temperaturänderung verringert, so dass Schließwege im Hauptbremszylinder optimiert werden können.
- Demzufolge verbessert sich der Komfort der Druckregelung im aktiven Modus, da geringe Druckgradienten angesteuert werden können.
- Durch die Optimierung des Bremskraftverstärkers 1 kann der Leerweg zwischen dem Bremspedal 8 und dem Bremskraftverstärker 1 vergrößert werden, so dass mehr Komfort im Fahrbetrieb bzw. bei der Rekuperation vorherrscht.

### Bezugszeichenliste

- 1: Bremskraftverstärker
- 2: Verstärkergehäuse
- 3: Bewegliche Wand
- 4: Unterdruckkammer
- 5: Arbeitskammer
- 6: Steuergehäuse
- 7: Steuerventil
- 8: Bremspedal
- 9: Eingangsglied
- 10: Elektromagnet
- 11: Pedalwegsimulator
- 12: Zu- und Abschaltvorrichtung
- 13: Ventilkolben
- 14: Teil
- 15: Teil
- 16: Kolben-Zylinderanordnung
- 17: Druckmittelaufnahmeraum
- 18: Kolben
- 19: Betätigungsstange
- 20: Druckraum
- 21: Verbindung
- 22: Drucksensor
- 23: Absperrventil
- 24: Steuergehäusevorderteil
- 25: Scheibe
- 26: Ausgangsglied
- 27: Dichtelement
- 28: Kolben
- 29: Dichtelement
- 30: Öffnung
- 31: Hülsenelement
- 32: Gerätefeder
- 33: Druckstück

- a: Abstand

## Patentansprüche

1. Bremsbetätigungseinheit zur Betätigung einer Kraftfahrzeugbremsanlage vom Typ "Brake-by-wire", wobei die Bremsbetätigungseinheit aufweist:
einen Bremskraftverstärker (1) mit einem Verstärkergehäuse (2), dessen Innraum durch wenigstens eine bewegliche Wand (3) in eine Unterdruckkammer (4) und eine Arbeitskammer (6) unterteilt ist, sowie mit einem die bewegliche Wand (3) tragenden Steuergehäuse (6), in dem ein Steuerventil (7) angeordnet ist, das eine auf die bewegliche Wand (3) einwirkende pneumatische Druckdifferenz steuert, wobei das Steuerventil (7) sowohl mittels eines mit einem Bremspedal (8) in eine kraftübertragende Verbindung bringbaren, mit einer Eingangskraft beaufschlagbaren Eingangsglieds (9) als auch mittels einer elektronischen Steuereinheit durch einen Elektromagneten (10) betätigbar ist, wobei zwischen dem Bremspedal (8) und dem Bremskraftverstärker (1) ein Abstand (a) vorgesehen ist, der in der Betriebsart "Brake-by-wire" eine Entkopplung einer kraftübertragenden Verbindung zwischen Bremspedal (8) und Bremskraftverstärker (1) ermöglicht,
einen dem Bremskraftverstärker (1) nachgeschalteten Hauptbremszylinder, auf dessen Kolben (28) eine Ausgangskraft des Bremskraftverstärkers (1) übertragen wird,
Mittel zum Erfassen des Betätigungsweges des Bremspedals (8),
einen mit dem Bremspedal (8) zusammenwirkenden Pedalwegsimulator (11), durch den in der Betriebsart "Brake-by-wire" eine auf das Bremspedal (8) wirkende Rückstellkraft unabhängig von einer Betätigung des Bremskraftverstärkers (1) simulierbar ist,
**dadurch gekennzeichnet, dass** der Bremskraftverstärker (1) als weggesteuerter Bremskraftverstärker vorgesehen ist, so dass das Bremspedal (8) außerhalb der Betriebsart "Brake-by-wire" von Rückwirkungskräften der Bremsbetätigungseinheit entkoppelt ist, und die Rückstellkraft auch außerhalb der Betriebsart "Brake-by-wire" durch den Pedalwegsimulator (11) simuliert wird.

2. Bremsbetätigungseinheit nach Anspruch 1, **dadurch gekennzeichnet, dass** die Eingangskraft des Bremskraftverstärkers (1) nur indirekt auf den Kolben (28) des Hauptbremszylinders übertragbar ist und die Ausgangskraft des Bremskraftverstärkers (1) über eine starre, kraftübertragende Verbindung auf den Hauptbremszylinder übertragen wird.

3. Bremsbetätigungseinheit nach Anspruch 2, **dadurch gekennzeichnet, dass** die Ausgangskraft von dem Steuergehäuse (6) über eine starre Scheibe (25) auf den Hauptbremszylinder übertragen wird, wobei die Scheibe (25) dichtend in einer Ausnehmung des Steuergehäuses (6) angeordnet ist.

4. Bremsbetätigungseinheit nach Anspruch 3, **dadurch gekennzeichnet, dass** die Ausgangskraft von dem Steuergehäuse (6) über die starre Scheibe (25) unter Zwischenschaltung eines Ausgangsgliedes (26) auf den Kolben (28) des Hauptbremszylinders übertragen wird.

5. Bremsbetätigungseinheit nach Anspruch 3, **dadurch gekennzeichnet, dass** die Ausgangskraft von dem Steuergehäuse (6) über die starre Scheibe (25) direkt auf den Kolben (28) des Hauptbremszylinders übertragen wird.

6. Bremsbetätigungseinheit nach Anspruch 4 oder 5, **dadurch gekennzeichnet, dass** zur Abdichtung am Umfang der Scheibe (25) ein ringförmiges Dichtelement (27) vorgesehen ist.

7. Bremsbetätigungseinheit nach Anspruch 2, **dadurch gekennzeichnet, dass** die Ausgangskraft von dem Steuergehäuse (6) unter Zwischenschaltung eines elastischen, scheibenförmigen Dichtelements (29) auf ein Ausgangsglied (26) des Bremskraftverstärkers (1) oder direkt auf den Kolben (28) des Hauptbremszylinders übertragen wird, wobei eine Öffnung (30) des Steuergehäuses (6) mittels eines Hülsenelementes (31) verschlossen ist und die Öffnung (30) mittels des elastischen, scheibenförmigen Dichtelementes (29) abgedichtet vorgesehen ist.

8. Verfahren zum Betreiben einer Kraftfahrzeugbremsanlage vom Typ "Brake-by-wire" mit einer Bremsbetätigungseinheit gemäß den vorangegangenen Ansprüchen 1 bis 7, **dadurch gekennzeichnet dass** die Ansteuerung des Bremskraftverstärkers (1) rein wegabhängig erfolgt, so dass das Bremspedal (8) außerhalb der Betriebsart "Brake-by-wire" von Rückwirkungskräften der Bremsbetätigungseinheit entkoppelt ist, und die Rückstellkraft auch außerhalb der Betriebsart "Brake-by-wire" durch den Pedalwegsimulator (11) simuliert wird.

## Claims

1. Brake actuating unit for actuating a motor vehicle braking system of the "brake-by-wire" type, wherein the brake actuating unit comprises:
a brake booster (1) having a booster housing (2), the interior of which is divided by at least one moveable wall (3) into a vacuum chamber (4) and a working chamber (6), and having a control housing (6) which supports the moveable wall (3) and in which a control valve (7) is arranged, which controls a pneumatic pressure differential acting on the moveable wall (3), wherein the control valve (7) can be actuated by a solenoid (10) both by means of an input element (9) that can be subjected to an input force and brought into a force-transmitting connection with a brake pedal (8), and also by means of an electronic control unit, wherein a distance (a), which allows a decoupling of a force-transmitting connection between the brake pedal (8) and the brake booster (1) in the "brake-by-wire" operating mode, is provided between the brake pedal (8) and the brake booster (1), a brake master cylinder which is connected to the output side of the brake booster (1) and to the piston (28) of which an output force of the brake booster (1) is transmitted, means for detecting the actuation travel of the brake pedal (8),
a pedal travel simulator (11), which interacts with the brake pedal (8) and which serves, in the "brake-by-wire" operating mode, to simulate a return force acting on the brake pedal (8) irrespective of an actuation of the brake booster (1),
**characterized in that** the brake booster (1) is provided as a travel-controlled brake booster, so that when not in the "brake-by-wire" operating mode the brake pedal (8) is decoupled from feedback forces of the brake actuating unit, and the return force is simulated by the pedal travel simulator (11) even when not in the "brake-by-wire" operating mode.

2. Brake actuating unit according to Claim 1, **characterized in that** the input force of the brake booster (1) can be transmitted to the piston (28) of the brake master cylinder only indirectly, and the output force of the brake booster (1) is transmitted to the brake master cylinder via a rigid, force-transmitting connection.

3. Brake actuating unit according to Claim 2, **characterized in that** the output force is transmitted from the control housing (6) to the brake master cylinder via a rigid disk (25), wherein the disk (25) is arranged so as to form a seal in a recess of the control housing (6).

4. Brake actuating unit according to Claim 3, **characterized in that** the output force is transmitted from the control housing (6) to the piston (28) of the brake master cylinder via the rigid disk (25) by way of an output element (26).

5. Brake actuating unit according to Claim 3, **characterized in that** the output force is transmitted from the control housing (6) directly to the piston (28) of the brake master cylinder via the rigid disk (25).

6. Brake actuating unit according to Claim 4 or 5, **characterized in that** for sealing purposes an annular seal element (27) is provided on the circumference of the disk (25).

7. Brake actuating unit according to Claim 2, **characterized in that** the output force is transmitted from the control housing (6) to an output element (26) of the brake booster (1) by way of an elastic, disk-shaped seal element (29), or directly to the piston (28) of the brake master cylinder, wherein a port (30) of the control housing (6) is closed by means of a sleeve element (31) and the port (30) is intended to be sealed by means of the elastic, disk-shaped seal element (29).

8. Method for operating a motor vehicle braking system of the "brake-by-wire" type having a brake actuating unit according to one of the preceding Claims 1 to 7, **characterized in that** the brake booster (1) is activated purely as a function of the travel, so that when not in the "brake-by-wire" operating mode the brake pedal (8) is decoupled from feedback forces of the brake actuating unit, and the return force is simulated by the pedal travel simulator (11) even when not in the "brake-by-wire" operating mode.

## Revendications

1. Unité d'actionnement de frein destinée à actionner un système de freinage de véhicule automobile du type "Brake-by-wire", dans laquelle l'unité d'actionnement de frein présente:
un servofrein (1) avec un boîtier de servofrein (2), dont l'espace intérieur est divisé par au moins une paroi mobile (3) en une chambre à dépression (4) et une chambre de travail (6), ainsi qu'avec un boîtier de commande (6) portant la paroi mobile (3), dans lequel est disposée une soupape de commande (7) qui commande une différence de pression pneumatique agissant sur la paroi mobile (3), dans laquelle la soupape de commande (7) peut être actionnée aussi bien au moyen d'un organe d'entrée (9) pouvant être soumis à une force d'entrée et mis en liaison de transmission de force avec une pédale de frein (8) qu'au moyen d'une unité de commande électronique par un électroaimant (10), dans laquelle il est prévu entre la pédale de frein (8) et le servofrein (1) une distance (a) qui permet, dans le mode de fonctionnement "Brake-by-wire", un découplage d'une liaison de transmission de force entre la pédale de frein (8) et le servofrein (1),
un maître-cylindre de frein installé en aval du servofrein (1), au piston (28) duquel une force de sortie du servofrein (1) est transmise,
des moyens pour détecter la course d'actionnement de la pédale de frein (8),
un simulateur de course de pédale (11) coopérant avec la pédale de frein (8), par lequel, dans le mode de fonctionnement "Brake-by-wire", une force de rappel agissant sur la pédale de frein (8) peut être simulée indépendamment d'un actionnement du servofrein (1),
**caractérisée en ce que** le servofrein (1) est prévu comme un servofrein commandé par la course, de telle manière que la pédale de frein (8), en dehors du mode de fonctionnement "Brake-by-wire", soit découplée de forces de rappel de l'unité d'actionnement de frein, et que la force de rappel soit simulée par le simulateur de course de pédale (11), également en dehors du mode de fonctionnement "Brake-by-wire".

2. Unité d'actionnement de frein selon la revendication 1, **caractérisée en ce que** la force d'entrée du servofrein (1) ne peut être transmise que de manière indirecte au piston (28) du maître-cylindre de frein et la force de sortie du servofrein (1) est transmise au maître-cylindre de frein par une liaison rigide de transmission de force.

3. Unité d'actionnement de frein selon la revendication 2, **caractérisée en ce que** la force de sortie est transmise du boîtier de commande (6) au maître-cylindre de frein par un disque rigide (25), dans laquelle le disque (25) est disposé de façon étanche dans un évidement du boîtier de commande (6).

4. Unité d'actionnement de frein selon la revendication 3, **caractérisée en ce que** la force de sortie est transmise du boîtier de commande (6) au piston (28) du maître-cylindre de frein par le disque rigide (25) avec interposition d'un organe de sortie (26).

5. Unité d'actionnement de frein selon la revendication 3, **caractérisée en ce que** la force de sortie est transmise du boîtier de commande (6) au piston (28) du maître-cylindre de frein par le disque rigide (25).

6. Unité d'actionnement de frein selon la revendication 4 ou 5, **caractérisée en ce qu'**il est prévu un élément d'étanchéité annulaire (27) pour l'étanchéité à la périphérie du disque (25).

7. Unité d'actionnement de frein selon la revendication 2, **caractérisée en ce que** la force de sortie est transmise du boîtier de commande (6) à un organe de sortie (26) du servofrein (1) avec interposition d'un élément d'étanchéité élastique en forme de disque (29) ou directement au piston (28) du maître-cylindre de frein, dans laquelle une ouverture (30) du boîtier de commande (6) est fermée au moyen d'un élément de douille (31) et il est prévu que l'ouverture (30) soit rendue étanche au moyen de l'élément d'étanchéité élastique en forme de disque (29).

8. Procédé permettant de faire fonctionner un système de freinage de véhicule automobile du type "Brake-by-wire" avec une unité d'actionnement de frein selon les revendications précédentes 1 à 7, **caractérisé en ce que** la commande du servofrein (1) est effectuée purement en fonction de la course, de telle manière que, en dehors du mode de fonctionnement "Brake-by-wire", la pédale de frein (8) soit découplée des forces de rappel de l'unité d'actionnement de frein, et que la force de rappel soit, également en dehors du mode de fonctionnement "Brake-by-wire", simulée par le simulateur de course de pédale (11).
